# EUROPEAN PATENT APPLICATION

(11) **EP 4 596 373 A1**
(43) Date of publication of application: **06.08.2025**
(21) Application number: 23871124.6
(22) Date of filing: 22.09.2023
(51) Int. Cl.: B62D 21/18, B66F 9/075, F16H 57/025

(54) **FORKLIFT WITH AN INTERCHANGEABLE POWER TRAIN**

(30) Priority: 29.09.2022 ES 202230841
(71) Applicant: UP Lifting Vertical, S.A., 22197 Huesca Huesca (ES)
(72) Inventor: PERBECH RELUY, Manuel, 22197 Huesca Huesca (ES); ASENSIO FLORES, Javier, 22197 Huesca Huesca (ES)
(74) Representative: Schäfer, Matthias W.
(86) International application number: PCT/ES2023/070567
(87) International publication number: WO 2024/069029

(57) **Abstract**

The present invention relates to an all-terrain forklift to which a modular concept is applied in order to obtain four different power train configurations without modifying the geometry of all the structural elements of the forklift or the type of use for which it is intended. The four power configurations are 4x2 diesel drive, 4x4 diesel drive, 4x2 electric drive and 4x4 electric drive. The modular concept is based on an industrial metalwork chassis/structure (1) built from steel plate of varying thicknesses, and supports that in turn comprise a tie plate (3) welded to the inside of the side walls (2), supports for a transfer box (4) and supports for the power train (7), both of which are also formed from steel plate and fastened to the tie plate (3) using screws and washers.

## Description

The forklift with interchangeable power train, object of the present invention, has four different and interchangeable drive configurations without any of the main elements such as the chassis or hydraulic installation being modified. To do this, supports have been created that are points with which to tie the power train to a fabricated metal structure sharing geometry and joint typology.

### Background of the invention

There are currently numerous background documents of modular vehicles for different vehicle configurations in the state of the art, some of them refer to configurations with external elements for different utilities.

For example, document RU2210720 refers to a tank with a multi-purpose structure with protection typical of a tank and optimal volumes that allow configuring different vehicle versions, mounting different turrets and/or platforms.

Another more recent document, US20220135158, refers to an electric vehicle with an interchangeable system of elements and batteries that allows using the same vehicle for different purposes.

Also, background documents have been found that refer to vehicles built with modular components attached to a structure. As an example, document US2011253467 refers to a machine intended for construction, specifically an excavator with a chassis on which operating modules are mounted.

Finally, a British application has been found, GB2516057, which refers to a frame structure with brackets to mount an engine on it, this structure is designed mainly to absorb the vibrations of said engine.

The invention described below, unlike the ones above, allows for a vehicle built with a diesel engine to be replaced by an electric drive engine, or also allows for vehicle built with two-wheel drive to be transformed into a 4x4 traction vehicle, in a short period of time and that does not affect components already existing in the vehicle nor its main use or its performance. It is a solution that seeks to adapt a vehicle to new technologies, new environmental regulations, or customer needs without involving complex operations and long periods of immobilization of the vehicle.

### Description of the invention

The invention described below concerns an all-terrain forklift in which a modular concept has been applied that has four different power train configurations without altering the geometry of all the structural elements of the forklift. The four drive configurations are; 4x2 diesel drive, 4x4 diesel drive, 4x2 electric drive and 4x4 electric drive.

To make it possible for these four configurations, whilst not excluding others that may differ from those mentioned, to be interchangeable in a very short period of time, without altering any of the structural elements, or the functions of the forklift, a new chassis has been designed which is a fabricated metal structure with mounted supports consisting of tie-down plates and supports.

A chassis that has a fabricated metal structure has been preferred over a chassis manufactured in a tubular structure. This fabricated metal structure made of steel plate of different thicknesses has been selected because, despite being heavier, it has the advantage of creating a central space free of "obstacles" to be able to exchange components of different geometries. Another advantage is that the side walls of this structure can be easily configured, both in the arrangement of elements and in their perimeter and surface, an advantage that has been very useful when defining all the spaces and number of brackets necessary, a minimum of three on each side, to mount the four power train configurations interchangeably.

The tie plate is a flat sheet, in a high elastic limit steel, of a thickness between 15 and 40 mm with a cut of a rectangular perimeter and a hollow in the centre. Threaded holes between M10 and M16 are distributed equidistantly on the surface of the sheet. A minimum of 6 tie plates are welded on both sides on the inner face of the side walls of the fabricated metal structure and in a facing position, a minimum of three on one side and three on the other. In addition to the welding bead on the outer perimeter, a bead is also applied to the hollow on the inside.

The bracket is made of steel sheet and consists of two pieces; a laser-cut base with a thickness that ranges between 10 mm and 30 mm with mounting holes that coincide in position with the threaded holes of the plate. The other piece is a bracket, in steel sheet of a thickness ranging between 10 mm and 30 mm, cut by laser and with two folds that configures a U-shaped piece. The bracket is welded to the base by applying a bead to three of its sides, leaving the lower part of the bracket free.

This bracket at the top has a design that adapts to the demands of the element it supports, since between the drive train or transfer box a specific silent block is placed for each component to avoid vibrations, and each silent block has a specific design according to the load it supports. In this case there is a bracket for the power train and another for the transfer box. Making these brackets in two pieces, on the one hand, the base plate and on the other hand, the bracket, is an added advantage since if the power train is subject to future modifications and if it requires brackets with a new geometry, replacing them would also be very simple

The bracket is fixed to the welded tie plate on the inner face of the side walls of the fabricated metal structure by means of screws and washers.

It is now understood that with this tie-plate assembly, common to all the brackets and the bracket specific to each drive train or transfer box, replacing one with another is clearly fast since it is a very simple process where the old unit is removed, the bracket is replaced if necessary (merely by screwing and unscrewing) and the new unit is fixed to the bracket. The housing is assembled and the all-terrain forklift is ready to operate with its new power train.

In addition to saving time and economic cost, it also does not affect components already existing in the vehicle or its main use or performance. That is, in the invention described, the machine does not change its use, or even its outer dimensions. In any of the configurations it always performs the same type of work, lifting the same load capacity with the forks.

All information referring to examples or modes of embodiment, form part of the description of the invention.

### Description of the figures

In order to better understand the object of the present invention, a preferential practical embodiment thereof has been represented in the attached drawing.
Figure 1.- shows a perspective view of the industrial fabricated metal structure (1) with the tie plates (3) fixed to it.
Figure 2.- Shows the bracket, one configured for transfer box (4) and the other bracket configured for a power train (7)
Figure 3.- Shows a front view of the tie plate (3)
Figure 4.- Shows a perspective view of the power train bracket (7)

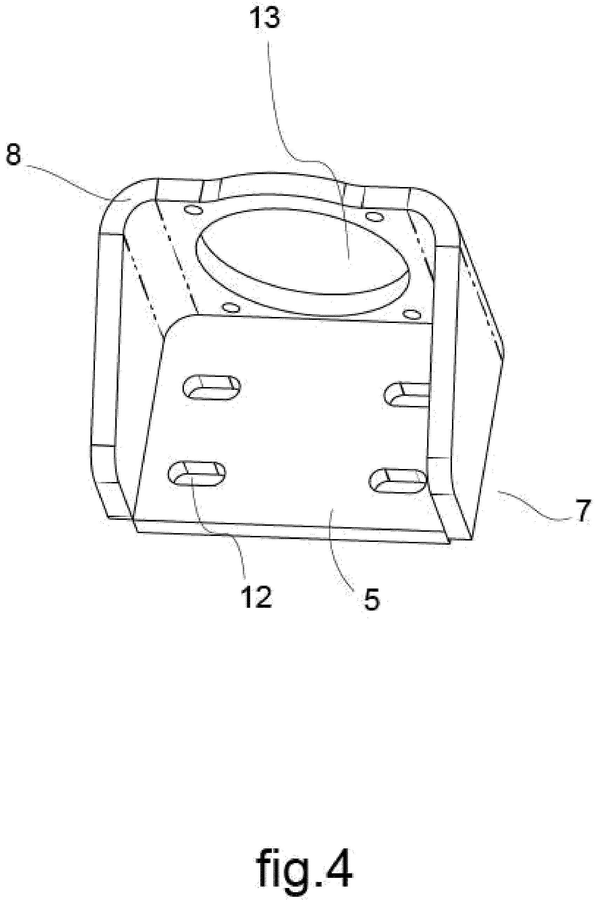

Figure 4.- Shows a perspective view of the transfer case bracket (4)

### Preferred embodiment of the invention

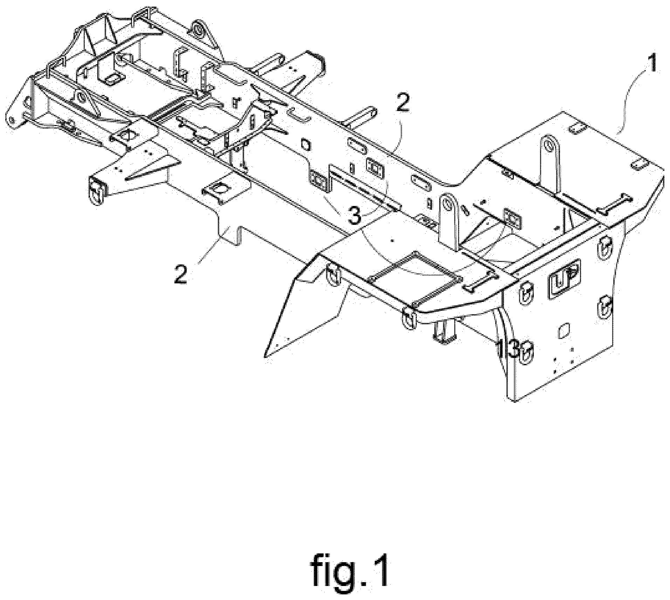

The support, object of the present invention, shown in figure 1, is a perspective view of the fabricated metal structure (1) built in steel sheet of different thicknesses, and which serves to illustrate why an fabricated metal structure is preferred, heavier compared to a structure made of the lightest profile. The reason is the clean central space that enables the interchange of components that are not going to have the same geometry and volume. Another reason is in the side walls (2) which, being an easily configurable surface, allows the simplest way of distributing the internal components of the forklift and makes changing the power train very simple and fast, and without modifying the structural elements. This figure shows the tie plates (3) where this characteristic of flexibility and simplicity can be seen when arranging the internal components of the forklift.

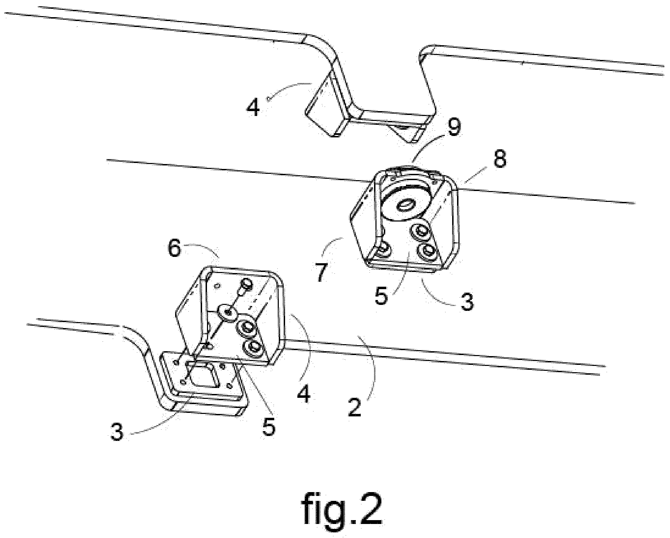

The support, object of the present invention, in figure 2, is a detailed view of the types of bracket and their assembly. In the lower part on the side wall (2) the tie plate (3) is welded on the protrusion. The transfer case bracket (4) is built in two parts, the base (5) and the transfer case bracket (6), the tightening means that, as mentioned, are screw and washer. At the top another bracket mounted, in this case is a power train bracket (7) on a tie plate (3) constructed as mentioned above, in two pieces, the base (5) and the power train bracket (8) that also allows mounting a silent block (9) on the bracket. This detail also allows you to see the two transfer case brackets (4) facing each other.

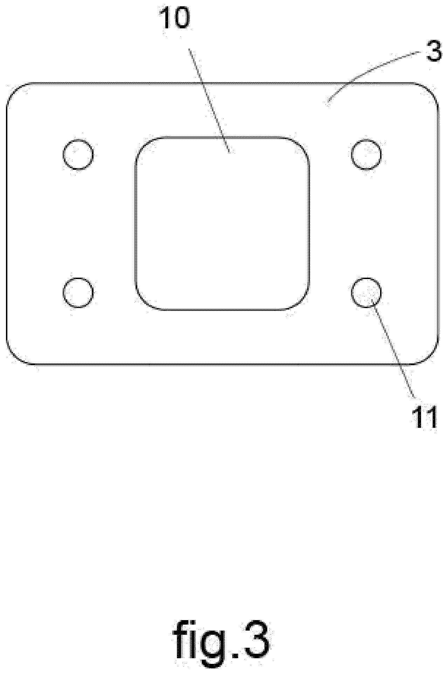

The support, object of the present invention, shown in figure 3, is a front view of the tie plate (3) with the inner hollow (10) created to reinforce the fixing of this tie plate (3) by welding it to the side wall (2) of the fabricated metal structure. This tie plate (3) also has threaded holes (11) in its interior walls.

The support, object of the present invention, in figure 4, is a perspective view of the power train bracket (7) built in two pieces, a base (5) with mounting holes (12) and a power train bracket (8) built in sheet folded and welded to the base (5). On the upper face, a hollow (13) is made to insert a silent block (9). This bracket is fixed to the tie plate (3) by means of fixing means and for this case screws and washers have been selected.

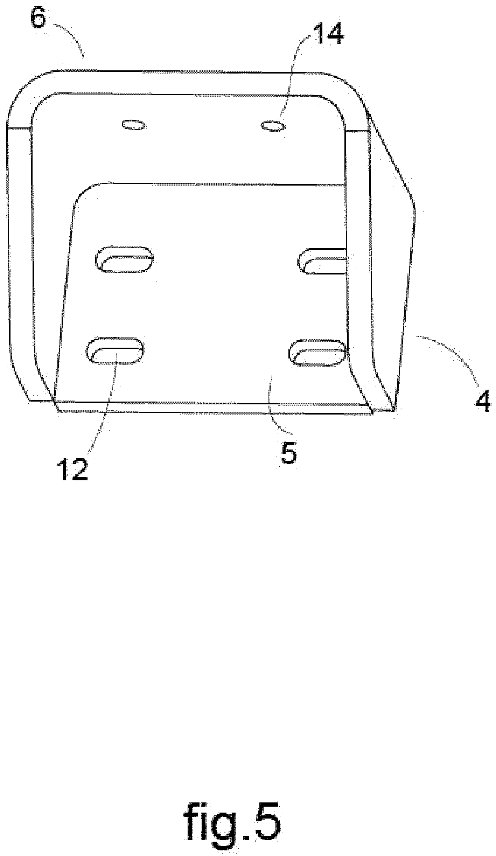

The support, object of the present invention, in figure 5, is a perspective view of the bracket for a transfer box (4) built in two pieces, a base (5) with mounting holes (12) and a bracket for a transfer box (6) built in folded sheet metal and welded to the base (5). Through holes (14) are machined in the upper face. Like the previous one, this bracket is fixed to the tie plate (3) by means of screws and washers. Finally, we will mention that the advantage of screwing these supports to a tie plate (3) is that we anticipate any variation that may exist in the drive unit and that would force us to change the geometry of the brackets for the drive train (7) or the supports for the transfer box (4). The change would be as simple as adapting this bracket to the new characteristics and replacing it in a very simple way.

Any person skilled in the art will easily understand that the characteristics of different embodiments can be combined with characteristics of other possible embodiments whenever such a combination is technically possible.

## Claims

1. All-terrain forklift with interchangeable power train **characterized in that** it comprises a fabricated metal structure (1) built of thick, die-cast steel sheet,
- supports which in turn comprise a tie plate (3) welded to the inside of the side walls (2) supports for transfer box (4) and supports for a power train (7) fixed to the tie plate (3) by means of bolts and washers.

2. All-terrain forklift with interchangeable power train, according to claim 1, **characterized in that** the transfer case brackets (4) consist of two pieces formed of steel plate and are a base (5) with mounting holes (12) and a bracket (6).

3. All-terrain forklift with interchangeable power train, according to the previous claims, **characterized in that** the power train brackets (7) consist of two pieces formed in steel plate and are a base (5) with mounting holes (12) and a bracket (8) with an upper hollow (13), welded and a silent block (9) inserted in the upper hollow (13).

4. All-terrain forklift with interchangeable power train, according to the preceding claims, **characterized in that** that the tie plate (3) is constructed of steel sheet, with an internal recess (10) and a plurality of threaded holes (11).
